# EUROPEAN PATENT SPECIFICATION

(11) **EP 2 736 353 B1**
(45) Date of publication and mention of the grant of the patent: **28.12.2016**
(21) Application number: 11869767.1
(22) Date of filing: 27.07.2011
(51) Int. Cl.: A23L 29/262, A23L 29/206, A23C 19/09

(54) **EDIBLE COMPOSITION COMPRISING CELLULOSE ETHER AND ITS USE AS FAT SUBSTITUTE IN DAIRY PRODUCTS**
ESSBARE ZUSAMMENSETZUNG MIT CELLULOSEETHER UND IHRE VERWENDUNG ALS FETTERSATZ IN MOLKEREIPRODUKTEN
COMPOSITION COMESTIBLE COMPRENANT UN ÉTHER DE CELLULOSE ET SON UTILISATION EN TANT QUE SUBSTITUT DE MATIÈRES GRASSES DANS DES PRODUITS LAITIERS

(43) Date of publication of application: 04.06.2014
(73) Proprietor: Dow Global Technologies LLC, Midland, MI 48674 (US)
(72) Inventor: YUN, Yonnie D., Shanghai 200032 (CN); YAN, Zheng Y., Shanghai 201100 (CN); LI, Ming H., Shanghai, SG 201203 (CN); HUEBNER, Britta, NI 31311 Uetze (DE); SHI, Eric, Shanghai (CN); SHI, Xiuqin, Shanghai 200081 (CN)
(74) Representative: f & e patent
(86) International application number: PCT/CN2011/077696
(87) International publication number: WO 2013/013401

(56) References cited:
- EP-A1- 1 982 597
- WO-A1-95/21534
- WO-A1-2013/000137
- CA-A1- 2 455 717
- CN-A- 1 681 400
- CN-A- 101 756 081
- GB-A- 2 258 800
- US-A- 4 997 669
- US-A- 5 106 644
- US-A1- 2007 014 913

## Description

### FIELD

The present invention relates to an edible composition comprising a combination of methylcellulose and/or hydroxypropyl methylcellulose with a specific polysaccharide hydrocolloid. The composition may be used to at least partially replace fat in dairy products.

### INTRODUCTION

In past decades, overweight and obesity are major risk factors for a number of chronic diseases. World Health Organization (WHO) has recommended "limit energy intake from total fats", "shift fat consumption away from saturated fats to unsaturated fats" and "elimination of trans fats" to achieve a energy balance and healthy weight. The concerns about health and cosmetics have brought lots of demands on dairy products such as cheese, butter and ice cream to reduce fat content.

Lots of efforts have been made by dairy industries to replace fat in prepared foodstuffs. For example, specific bacteria starter or adjunct culture were utilized to produce low fat dairy products with similar texture and flavor. Moreover, technologies using low temperature, high pressure cooking and high pH at drain and milling were applied. Meanwhile, many studies focused on the use of fat substitutes or fat mimetics. However, the replacement of fat in dairy products such as soft cheese or cream cheese involves a lot of problems:
Appearance, texture, rheology and mouth feel of fat substitutes should be similar or even identical with the conventional dairy products. Unfortunately, the body texture and flavor of no fat or low fat products have not been entirely satisfactory for ordinary consumer use. Additional processing and cost are always required to simulate fat in final products.

Thermal and refrigerating stability are also critical. Lots of dairy products need wide temperature tolerance in producing, storage, consumption and cooking. However, thermal and refrigerating stability are not easy to be achieved by products containing fat substitutes.

Syneresis of fat substitute needs to be controlled. Lots of main ingredients of conventional fat substitutes such as starch, cellulose, hydrocolloid etc. will be dehydrated at relative high or low temperature. The excluded water may result in phase separation and a visible water layer in dairy products.

Bubble problems can be observed in some fat replacement techniques, which will be a negative factor to produce low fat dairy spread and some other products. The high shear blending processes in dairy products may introduce air inside the food texture. Further, some special systems will release gas during processing, which also leads to undesired foaming in fat substituted products.

Compatibility of the fat substitute with the dairy product is also a key problem. Conventional techniques always use congeneric components to prepare fat mimetics for dairy products such as whey protein, skimmed milk, and milk protein. However, these mimetics are relative expensive and not easy to produce.

Low fat dairy foods such as low fat soft cheese/cream cheese with a smooth and butter-like body usually contain higher proportions of moisture due to the decreased fat content. United States Department of Agriculture (USDA) specifications for light and reduced fat cream cheese allow up to 70 % moisture. However, increased moisture levels often result in products that are too soft and lacking the desired firmness and texture. Gum traditionally has been added to low fat cream cheese to impart a firmer texture. Unfortunately, the addition of gums and the like also results in a more gel-like texture, and thus the spreadability of low fat cream is not as good as that of normal cheese. Sometimes, whey protein is also added to soft cheese, but the relative high concentration results in increased production costs.

US-A-5,106,644 relates to a fat substitute comprising: (a) from 0.5 % to 99.5 % of a lipid such as a fat or oil, and (b) from 0.5 % to 99.5 % of a stable polymeric liquid crystal consisting essentially of: (1) from 10 % to 90 % of a solvent, e.g. water, and (2) from 10 % to 90 % of a polysaccharide having a molecular weight of from 500 to 1,000,000. Exemplary polysaccharides are methyl cellulose, ethyl cellulose, ethylhydroxy ethylcellulose, hydroxypropyl cellulose, sodium carboxymethyl cellulose, hydroxypropyl methylcellulose, ethylmethyl cellulose, guar gum derivatives, xanthan gum, psyllium gum, alginate, and locust bean gum. Hydroxypropyl cellulose, sodium carboxymethyl cellulose, xanthan gum, and alginate are preferred. In all examples hydroxypropyl cellulose is used, as a single polysaccharide or in combination with xanthan gum or carrageenan. The polysaccharides are employed in relatively high amounts (> 10 %) which implies high costs and a potential negative influence on flavor release. During preparation of the liquid crystal phase, separation of the liquid crystal phase from excess liquid may become necessary. This may be achieved by ultracentrifugation which additional process step further increases the cost of production.

US-A-2003/0044503 is directed to a self-sustaining composite food product composing an edible gel that is solid at ambient temperature and changes in texture at an elevated temperature. The composite food product comprises 0.3 to 20 % by weight of a gelling agent, 0.1 to 60 % by weight of a flavoring and/or texturing component, optionally 5 to 40 % by weight of a fat and/or oil component, and 15 to 80 % by weight of water. The gelling agent is selected from the group consisting of gelatin, egg white, egg white protein, albumin, wheat protein, whey protein, casein, soy protein, pea protein, starch, modified food starches, gellan gum, pectin, alginate, collagen, carrageenan, agar, methylcellulose, and combinations thereof, and the texturing component is selected from the group consisting of starches, modified food starches, guar gum, locust bean gum, xanthan gum, carrageenan, gum arabic, maltodextrin, cellulose gum, corn syrup solids, whey proteins, milk proteins, casein, soy proteins, wheat proteins, meat proteins, plasma proteins, fats, oils, dextrins, mono-glycerides, di-glycerides, and lecithin. The preferred gelling agents which are also employed in the examples are gelatin, modified waxy maize starch, and rennet casein. Gelatin and rennet casein are of animal origin which restrict their use in vegetarian products. Moreover, the gist of US-A-2003/0044503 is to provide a food product that changes its textures with temperature which behavior is undesirable for many applications.

WO-A-81/01353 and WO-A-81/01354 describe a process for preparing a low-fat liquid ('1353) or solid ('1354) spread comprising water, less than 40 % by weight, preferably 10 to 30 % by weight of fat, a stabilizer, typically in an amount of from 0.1 to 3.0 % by weight, and an emulsifier system comprising a combination of a lipophilic emulsifier and a hydrophilic emulsifier. In preferred embodiments the stabilizer is a hydrophilic colloid and can be selected from the group consisting of gelatin, locust bean gum, pectin, microcrystalline cellulose, carageenan, guar gum, alginate, xanthan gum, soy protein isolate, methyl cellulose, carboxymethyl cellulose, ethyl cellulose, hydroxypropyl methylcellulose, dextrins, starch, and mixtures of these. The commercially available stabilizer formulations "Frimulsion Q8" (blend of modified starch, locust bean gum, guar gum, gelatin, and pectin) and "Frimulsion 10" (blend of locust bean gum and guar gum) are most preferred and employed in all examples. The low-fat products of WO-A-81/01353 and WO-A-81/01354 necessitate a relative complex emulsifier system. Further, the use of polyoxyethylene (20) sorbitan monostearate, polyoxyethylene (20) sorbitan monooleate which are the preferred hydrophilic emulsifiers is restrained with certain dosages in food applications in some countries.

US-A-2007/0264407 relates to a food stabilizer that can be incorporated into dairy-based beverages such a milk shakes. The food stabilizer is all natural and comprises a combination of native starch/carrageenan or a combination of microcrystalline cellulose/alginate. As the stabilizer system described is only used to stabilize liquid compositions it will not be considered by the skilled person for attaining a texture of a more solid dairy product such a cream cheese.

US-A-5,605,712 is directed to a stabilizer composition, useful for stabilizing frozen desserts, comprising (a) a first component of microcrystalline cellulose coprocessed with a calcium/sodium alginate salt complex in a weight ratio of microcrystalline cellulose to alginate salt complex of greater than about 80:20, in combination with (b) a second component of at least one water soluble hydrocolloid selected from the group consisting of guar gum, locust bean gum, sodium alginate, carrageenan, gum tragacanth, karaya gum, gum arabic, agar, konjac, xanthan gum, carboxymethyl cellulose, methylcellulose, hydroxymethylcellulose, and hydroxypropyl methylcellulose. Especially useful as the hydrocolloid component of the stabilizer are guar gum, locust bean gum, sodium alginate, carrageenan, xanthan and carboxymethyl cellulose, used either individually or in mixtures of two or more of these hydrocolloids. In all examples and comparative examples a combination of carboxymethyl cellulose with carrageenan is used as the hydrocolloid. As the stabilizer composition described is only used to stabilize frozen dessert formulations it will not be considered by the skilled person for attaining a texture of an unfrozen solid dairy product such a cream cheese.

WO 95/21534 describes a method for making a low fat natural cheese which involves adding a gel-forming fat mimetic to skim milk. This mimetic can be a gum selected from carrageenan, alginate, pectin, gellan, methyl cellulose and konjac.

The object to be solved by the present invention is to provide a new edible composition that may be used as a fat substitute to produce more healthy dairy food but avoids the problems of the prior art products. The new edible composition should have appearance, texture, mouth feel and spreading properties comparable to commercial dairy products such as soft cheese. Low production costs, stability and compatibility with dairy products both at refrigeration and boiling conditions and almost no syneresis problems are further requirements.

### SUMMARY

The object is solved by an edible composition comprising:
(a) a cellulose ether selected from
   (a1) methylcellulose,
   (a2) hydroxypropyl methylcellulose,
   and mixtures thereof;
(b) a polysaccharide hydrocolloid selected from
   (b1) alginic acid, alginates and mixtures thereof, and mixtures of (b1) with (b2) a non-ionic and non-acidic polysaccharide hydrocolloid different from cellulose ethers,
(c) water in an amount of 20 to 99% by weight based on the total weight of the composition, and
   (f) optionally a sugar in an amount of up to 10% by weight based on the total weight of the composition
wherein the total amount of cellulose ether (a) and polysaccharide hydrocolloid (b) ranges from 0.01 to 9 % by weight, based on the total weight of the composition, and the weight ratio of cellulose ether (a) to polysaccharide hydrocolloid (b) is within the range of from 1:8 to 8:1.

The present invention also concerns an edible product comprising the edible composition. The invention is also directed to the use of the edible composition to at least partially substitute fat in an edible product, preferably a dairy product.

### BRIEF DESCRIPTION OF DRAWINGS

Fig. 1 is a photographical representation of an edible composition of the present invention.
Fig. 2 is a photographical representation of an edible composition of the present invention in comparison with a commercially available edible composition.
Fig. 3 is a photographical representation of an edible composition of the present invention (Fig. 3-1) and three comparative edible compositions.
Fig. 4 is a photographical representation of two comparative edible compositions (Fig. 4-1) and Fig. 4-3)) and a 1: 1 mixture of an edible composition of the present invention and a comparative edible composition.
Fig. 5 is another photographical representation of an edible composition of the present invention (Fig. 5-1) and three comparative edible compositions.
Figures 6 and 7 illustrate the results of a texture analysis of an edible composition of the present invention and of comparative edible compositions.

### DETAILED DESCRIPTION

The present inventors surprisingly found that the use of a combination of a cellulose ether (a), which is methylcellulose (MC) and/or hydroxypropyl methylcellulose (HPMC), with a specific polysaccharide hydrocolloid (b) in a weight ratio within the range of from 1:8 to 8:1, preferably from 1:3 to 7:1, more preferably from 1:2 to 6:1, even more preferably from 1:1 to 5:1, and most preferably from 2:1 to 4:1, provides a synergistic effect and imparts favorable properties to the edible composition.

The cellulose ether (a) is methylcellulose (MC) (a1), hydroxypropyl methylcellulose (HPMC) (a2) or a mixture of both.

A preferred MC (a1) for use in the present invention has an average degree of substitution DS_{methyl} of from 1.2 to 2.0, more preferably from 1.5 to 1.9 and most preferably from 1.7 to 1.9. Typically, viscosities of 2 % by weight aqueous CMC solutions at 20°C, determined with a Ubbelohde tube viscometer, range from 40 to 80,000 mP·s, preferably from 1,000 to 78,000 mP·s, and more preferably from 15,000 to 75,000 mP·s. Examples of commercially available MCs that are useful in the present invention include METHOCEL™, A, SGA, E, K, and G series; especially preferred is METHOCEL™ A40M (DS_{methyl} = 1.8, 2 % by weight viscosity = 40,000 mPa·s,), all METHOCEL grades being available from The Dow Chemical Company, Midland, U.S.A. or Dow Wolff Cellulosics, Walsrode, Germany.

Preferably, the HPMC (a2) for use in the present invention has an average degree of substitution DS_{methyl} of from 1.2 to 2.0, more preferably of from 1.3 to 1.8, and most preferably from 1.3 to 1.5 and a molar degree of substitution MS_{hydroxypropyl} of from 0.1 to 0.25, more preferably of from 0.15 to 0.25, and most preferably of from 0.20 to 0.23. Typically, viscosities of 2 % by weight aqueous HPMC solutions at 20°C, determined with a Ubbelohde tube viscometer, range from 15 to 250,000 mPa·s, preferably from 450 to 200,000 mPa·s, and more preferably from 4,000 to 180,000 mPa·s. Examples of commercially available HPMCs that are useful in the present invention include METHOCEL™ K100M (DS_{methyl} = 1.4, MS_{hydroxypropyl} = 0.21, 2 % by weight viscosity = 100,000 mPa·s), and more preferably METHOCEL™ K15M (DS_{methyl} = 1.4, MS_{hydroxypropyl} =0.21, 2 % by weight viscosity = 15,000 mP·s), all METHOCEL grades being available from The Dow Chemical Company, Midland, U.S.A. or Dow Wolff Cellulosics, Walsrode, Germany.

In some embodiments the edible composition is free of any cellulose ether different from methylcellulose and hydroxypropyl methylcellulose.

The edible composition of the present invention further comprises a polysaccharide hydrocolloid (b) selected from (b1) alginic acid, alginates and mixtures thereof, and mixtures of (b1) with (b2) a non-ionic and non-acidic polysaccharide hydrocolloid different from cellulose ethers. Typically, polysaccharide hydrocolloid (b) comprises 10 to 100 % by weight of (b1) and 0 to 90 % by weight of (b2), preferably 20 to 100 % by weight of (b1) and 0 to 80 % by weight of (b2), and more preferably 40 to 100 % by weight of (b1) and 0 to 60 % by weight of (b2), each based on the total weight of (b1) and (b2). In other embodiments polysaccharide hydrocolloid (b) comprises 10 to 90 % by weight of (b1) and 10 to 90 % by weight of (b2), preferably 20 to 80 % by weight of (b1) and 20 to 80 % by weight of (b2), and more preferably 40 to 60 % by weight of (b1) and 40 to 60 % by weight of (b2), each based on the total weight of (b1) and (b2).

Typically, the edible composition of the present invention comprises 0.005 to 8 % by weight, preferably 0.01 to 8 % by weight, more preferably 0.05 to 5 % by weight, and most preferably 0.1 to 3 % by weight of polysaccharide hydrocolloid (b).

The term "polysaccharide hydrocolloid" as used in the present application includes one type of polysaccharide hydrocolloid as well as mixtures of different types of polysaccharide hydrocolloids. Hydrocolloids are well known to the person skilled in the art and polysaccharide hydrocolloids are polysaccharide-based compositions that form colloidal dispersions (also referred to as "colloidal solutions") in water. Typically, they are also able to form gels.

For the ease of understanding and to conform to usual practice in the art the sugars within this application are referred to by the names of their open chain forms (e.g. fructose and glucose) irrespective of their actual conformation which is in the polysaccharide molecule, of course, always the ring form. The 5-membered rings are known as furanoses and the 6-membered rings are known as pyranoses. For example, in the case of fructose units and glucose units within a polysaccharide their correct designation would be fructofuranose units and glucopyranose units, respectively, which terms are less common to describe the composition of a polysaccharide.

Alginic acid is a linear copolymer of (1-4)-linked β-D-mannuronic acid (M-unit) and α-L-guluronic acid (G-unit) which units are linked together in different sequences or blocks. The monomers can appear in homopolymeric blocks of consecutive G-units (G-blocks), consecutive M-units (M-blocks), alternating M- and G-units (MG-blocks), or randomly organized blocks. Alginate is the salt of alginic acid and comprises the respective mannuronate and guluronate units. Typically, alginate is employed in the present invention, for example sodium and/or calcium alginate. Alginic acid/alginate are extracted from seaweeds, such as giant kelp (Macrocystis pyrifera).

In addition to the alginate-based polysaccharide hydrocolloid (b1) the present edible composition may optionally contain a non-ionic and non-acidic polysaccharide hydrocolloid (b2) different from cellulose ethers.

Preferably, polysaccharide hydrocolloids (b2) for use in the present composition are based on non-digestible polysaccharides. More preferably, the polysaccharide hydrocolloids (b2) are natural gums including vegetable gums (e.g. fenugreek gum, guar gum, tara gum, locust bean gum, konjac gum, and inulin), gums derived from algae (e.g. agarose which is the main component of agar), and gums derived from bacteria (e.g. curdlan).

Curdlan is mainly composed of β-1,3-glucan which is a high molecular weight polymer of glucose and consists of β-(1,3)-linked D-glucose units. It is produced by bacteria such as Alcaligenes faecalis var. myxogenes, Agrobacterium radiobacter or Agrobacterium biobar.

Further xamples of polysaccharide hydrocolloids (b2) for use in the present invention are galactomannan-based gums such as is fenugreek gum, guar gum, tara gum, and locust bean gum; and glucomannan-based gums such as konjac gum.

Galactomannans are polysaccharides consisting of a D-mannose backbone with D-galactose side groups. The mannose units are linked with 1β→74 linkages to which galactose units are attached with 1α→6 linkages. Galactomannans are the main ingredient of several vegetable gums and the approximate ratios of mannose to galactose for the following gums are: fenugreek gum, mannose:galactose = 1:1; guar gum, mannose:galactose 2:1; tara gum, mannose:galactose 3:1; and locust bean gum (carob gum), mannose:galactose 4:1.

Glucomannan is a polysaccharide that consists of D-glucose (G- unit) and D-mannose (M-unit) in a proportion of 5:8 joined by 1β→4 linkages. The basic polymeric repeating unit has the pattern: GGMMGMMMMMGGM. Short side chains of 11-16 monosaccharides occur at intervals of 50-60 units of the main chain attached by 1β→3 linkages. Also, acetyl groups on carbon 6 occur at every 9-19 units of the main chain. Glucomannan is the main ingredient of konjac gum obtained from tubers of Amorphophallus konjac.

Inulins, also called fructans, are polymers consisting of fructose units that typically have a terminal glucose unit. The fructose units in inulins are joined by a β(2→1)glycosidic bond. Inulins are present in many vegetables and fruits, including onions, leeks, garlic, bananas, asparagus, chicory, and Jerusalem artichokes. In general, plant inulins contain between 20 and several thousand fructose units. Inulins are named in the following manner, where n is the number of fructose residues: Inulins with a terminal glucose are known as α-D-glucopyranosyl-[β-D-fructofuranosyl]₍ₙ₋₁₎-D-fructofuranosides. Inulins without glucose are β-D-fructopyranosyl-[D-fructofuranosyl]₍ₙ₋₁₎-D-fructofuranosides.

Agar also known as agar-agar is a mixture of gel-forming agarose (up to 70 % by weight) and non-gelling agaropectin (up to 30 % by weight). Agarose is a linear polysaccharide made up of D-galactose and 3,6-anhydro-α-L-galactose units which are joined by alternating 1β→3 linkages and 1β→4 linkages. Agaropectin is a heterogeneous mixture of smaller molecules that occur in lesser amounts. Their structures are similar but slightly branched and sulfated in 6-position, and they may have methyl and pyruvic acid ketal substituents. Agar is obtained from the cell walls of some species of red algae, primarily from the genera Gelidium and Gracilaria, or seaweed (Sphaerococcus euchema). Commercially it is derived primarily from Gelidium amansii.

In a preferred embodiment polysaccharide hydrocolloid (b) for use in the present invention is alginate or alginate in admixture with the non-ionic and non-acidic polysaccharide hydrocolloid (b2) which is preferably curdlan or konjac gum.

The edible composition of the present invention comprises cellulose ether (a) and polysaccharide hydrocolloid (b) as defined above including preferred embodiments in a total amount of from 0.01 to 9 % by weight, preferably from 0.02 to 8 % by weight, more preferably from 0.05 to 5 % by weight, even more preferably from 0.1 to 3 % by weight, still more preferably from 0.3 to 2 % by weight, and most preferably from 0.5 to 1.5 % by weight, all percentages being based on the total weight of the edible composition.

Referring to the amount of non-ionic and non-acidic polysaccharide hydrocolloid (b2) to either define the amount of polysaccharide hydrocolloid (b) or the weight ratio of (b1):(b2) the term "non-ionic and non-acidic polysaccharide hydrocolloid" includes any non-ionic and non-acidic polysaccharide hydrocolloid present in the edible composition and is not restricted to the specific examples explicitly mentioned herein.

In some embodiments the edible composition is free of any ionic or acidic polysaccharide hydrocolloid different from alginate and alginic acid. The term "ionic or acidic polysaccharide hydrocolloid" does explicitly not include the agaropectin which is the non-gelling minor ingredient of agar.

Although the inventive edible composition only comprising cellulose ether (a), polysaccharide hydrocolloid (b) and water (c) has a similar texture profile as dairy products, especially as soft cheese, a triglyceride oil (d) may be added to further promote the similarity of appearance and texture between the present edible composition and dairy products.

Optionally, the edible composition of the present invention comprises a triglyceride oil (d) in an amount of from > 0 to 40 % by weight, preferably from 1 to 40 % by weight, more preferably from 5 to 20 % by weight, even more preferably from 10 to 30 % by weight, and most preferably from 15 to 25 % by weight, all percentages being based on the total weight of the edible composition. The term "triglyceride oil" as used in the present application includes one type of triglyceride oil as well as mixtures of different types of triglyceride oils. Triglyceride oils are natural fatty acid triglycerides (triglyceride fats) that are liquid at room temperature (20°C). They comprise mono- and/or polyunsaturated fatty acids. Triglyceride oils include vegetable and animal oils, vegetable oils being preferred for use in the present invention. Any edible oil may be employed in the present composition and typical examples include coconut oil, corn oil, cottonseed oil, olive oil, palm oil, palm kernel oil, peanut oil, rapeseed oil, safflower oil, sesame oil, soybean oil, sunflower oil, and mixtures thereof. Typically, the oil-containing edible compositions of the present invention form stable oil-in-water emulsions.

The edible composition according to the present invention may further comprise a salt (e), preferably in an amount of from > 0 to 10 % by weight, preferably from 0.01 to 5 % by weight, more preferably from 0.05 to 3 % by weight, and most preferably from 0.1 to 2 % by weight, all percentages being based on the total weight of the edible composition. The term "salt" as used in the present application includes one type of salt as well as mixtures of different types of salts. The salt promotes gel formation by mediating the gelling process and/or acts as emulsifier.

The gel-promoting salts for use in the present invention are typically inorganic salts which preferably comprise multivalent cations, more preferably divalent cations such as for example Ca²⁺, Mg²⁺, and/or Zn²⁺ cations, in combination with anions that are food safe such as phosphate, hydrogen phosphate, and chloride. Examples of suitable gel-promoting salts include calcium phosphate, calcium hydrogen phosphate, and mixtures thereof. If calcium phosphate, calcium hydrogen phosphate or another hydrogen phosphate or hydrogen phosphate of low solubility is used glucono delta-lactone (GDL) may be added which gradually reacts with the (hydrogen) phosphate to release the cation. A preferred amount of GDL is within the range of from 0.01 to 2 % by weight, based on the total weight of the edible composition.

The gel-promoting salts may also function as emulsifiers. Emulsifying salts which do not necessarily promote gel-formation may be added in addition to the gel-promoting salts or as the sole salt. Such salts include inorganic and organic salts which typically comprise a monovalent cation such as for example K⁺ and/or Na⁺, in combination with anions that are food safe such as phosphate, hydrogen phosphate, dihydrogen phosphate, chloride, and citrate. The salt may additionally comprise a multivalent cation, typically a trivalent cation such as for example Al³⁺. Examples of suitable emulsifying salts include trisodium phosphate, disodium hydrogen phosphate, sodium dihydrogen phosphate, sodium citrate, and alkaline sodium aluminum phosphate.

If present, the gel-promoting salt including the preferred salts mentioned above is typically comprised in the edible composition in an amount of from 0.01 to 1 % by weight, preferably from 0.5 to 0.8 % by weight, and more preferably from 0.1 to 0.5 % by weight, all percentages being based on the total weight of the edible composition.

If present, the emulsifying salt including the preferred salts mentioned above is typically comprised in the edible composition in an amount of from 0.01 to 1 % by weight, preferably from 0.05 to 0.8 % by weight, and more preferably from 0.1 to 0.5 % by weight, all percentages being based on the total weight of the edible composition.

The edible composition according to the present invention may further comprise a sugar (f), in an amount of from > 0 to 10 % by weight, preferably from 0.01 to 10 % by weight, more preferably from 0.1 to 10 % by weight, more preferably from 0.2 to 9 % by weight, and most preferably from 0.5 to 8 % by weight, all percentages being based on the total weight of the edible composition. The sugar is mainly added to improve taste. Examples of suitable sugars for use in the present invention include saccharose, dextrose, glucose syrup, glucose-fructose syrup, inverted sugar, fructose, lactose, and mixtures thereof, with saccharose being preferred.

Further exemplary ingredients that may be contained in the present edible composition include emulsifiers different from emulsifying salts, flavoring agents, antimicrobial agents and food dyes.

Water makes up the remainder of the edible composition and is contained in an amount of 20 to 99 % by weight, preferably from 50 to 90 % by weight, and more preferably from 70 to 85 % by weight, all percentages being based on the total weight of the edible composition.

In some embodiments the edible composition of the present invention comprises:
(a) a cellulose ether selected from
   (a1) methylcellulose,
   (a2) hydroxypropyl methylcellulose,
   and mixtures thereof;
(b) a polysaccharide hydrocolloid selected from
   (b1) alginic acid, alginates and mixtures thereof, and mixtures of (b1) with (b2) a non-ionic and non-acidic polysaccharide hydrocolloid different from cellulose ethers,
(c) 81 to 99.98 % by weight of water, and
(e) 0.01 to 10 % by weight of a salt,
wherein the total amount of cellulose ether (a) and polysaccharide hydrocolloid (b) ranges from 0.01 to 9 % by weight and the weight ratio of cellulose ether (a) to polysaccharide hydrocolloid (b) is within the range of from 1:8 to 8:1, preferably from 1:2 to 7:1, more preferably from 1:1 to 6:1, even more preferably from 3:1 to 5:1, and most preferably from 2:1 to 4:1,
all percentages being based on the total weight of the composition.

In more preferred embodiments the edible composition of the present invention comprises:
(a) a cellulose ether selected from
   (a1) methylcellulose,
   (a2) hydroxypropyl methylcellulose,
   and mixtures thereof;
(b) a polysaccharide hydrocolloid selected from
   (b1) alginic acid, alginates and mixtures thereof, and
   mixtures of (b1) with (b2) a non-ionic and non-acidic polysaccharide hydrocolloid different from cellulose ethers,
(c) 41 to 98.98 % by weight of water,
(d) 1 to 40 % by weight of triglyceride oil, and
(e) 0.01 to 10 % by weight of a salt,
wherein the total amount of cellulose ether (a) and polysaccharide hydrocolloid (b) ranges from 0.01 to 9 % by weight and the weight ratio of cellulose ether (a) to polysaccharide hydrocolloid (b) is within the range of from 1:8 to 8:1, preferably from 1:2 to 7:1, more preferably from 1:1 to 6:1, even more preferably from 3:1 to 5:1, and most preferably from 2:1 to 4:1,
all percentages being based on the total weight of the composition.

The edible composition according to the present invention may be prepared by several methods known in the art. One exemplary route is to first prepare separate colloidal solutions of each of the cellulose ether (a) and the polysaccharide hydrocolloid (b) and then combine those colloidal solutions and add further optional ingredients. Another exemplary route is to first dry mix the cellulose ether (a) and the polysaccharide hydrocolloid (b) and then prepare a colloidal solution of the mixture and add further optional ingredients.

The edible compositions of the present invention have comparable physical properties to traditional soft cheese products, including appearance, texture, rheology, spreadability, and mouth feel. They further exhibit outstanding thermal and refrigerating stability from -20 to 100 °C, even with high moisture contents, as well as low syneresis. During their preparation no or only minimal undesired foaming is observed at high shear blending operations. Thus, the final product is largely bubble-free. The present edible composition can be manufactured with a wide range of texture rheology and elasticity for different dairy products and at lower cost as compared to the dairy product. In preferred embodiments the present edible composition has appearance, texture, rheology and mouth feel of soft cheese or cream cheese.

The edible compositions of the present invention can either be commercialized as such in order to be eaten by the consumer in their unblended form or they can be mixed with other edible compositions to produce a new edible product. Such products preferably comprise 0.05 to 99.99 % by weight, more preferably 1 to 90 % by weight of the inventive edible composition. Typically, the edible product comprises (i) 0.5 to 99.5 % by weight, preferably 30 to 99 % by weight, more preferably 50 to 98 % by weight, and most preferably 85 to 97 % by weight of a base food component, and (ii) 0.5 to 99.5 % by weight, preferably 1 to 70 % by weight, more preferably 2 to 50 % by weight, and most preferably 3 to 15 % by weight of the edible composition as described above including the preferred embodiments. The base food component is any type of known foodstuff that is to be mixed with the inventive edible composition. As the edible compositions of the present invention are highly compatible with dairy products including casein protein, the base food component is preferably a dairy product, more preferably soft cheese or cream cheese.

The present edible composition may be used as a fat substitute or fat mimetic in an edible product, preferably a dairy product, and more preferably soft cheese or cream cheese. The inventive edible composition may be added to a product to replace part of the fat or the total amount of originally contained fat. A reduction in the amount of total fat is achieved by just mixing the original product with the edible composition of the present invention having a lower fat content than the original product. It is also possible to remove the fat from the dairy product and then add the inventive composition as replacement for the fat.

Some embodiments of the invention will now be described in detail in the following examples wherein all parts and percentages are by weight unless otherwise specified.

### EXAMPLES

**Raw Materials**

| Ingredient | Supplier |
|---|---|
| MC (METHOCEL A40M) | The Dow Chemical Company, Midland, U.S.A. |
| HPMC (METHOCEL K15M) | The Dow Chemical Company, Midland, U.S.A. |
| Alginate (Manucol DM) | FMC Company, Shanghai, China |
| Konjac (CKAA1220, 120 mesh) | Sheli Company, Chengdu, China |
| Curdlan (fine grade) | Xinrong Company, Shanghai, China |
| Guar (5500-6000 cP, 200 mesh) | Shree Ram Industries, Rajasthan, India |
| Agar (fine grade) | Ningying Company, Shanghai, China |
| CaCl₂ (food class) | Sinopharm Chemical Reagent Co., Ltd. Shanghai, China. |
| CaHPO₄ (food class) | Sinopharm Chemical Reagent Co., Ltd. Shanghai, China. |
| GDL (glucono delta-lactone) | Kabo Company, Shanghai, China |
| Peanut oil | Luhua Company, Shangdong province, China |

All concentrations in the following tables are based on the total weight of the composition prepared in the single steps.

### Testing methods

### Syneresis

For syneresis measurement a small scale cook yield test was applied. Syneresis was determined by measuring the amount of water lost or the decrease in the weight of the sample during heating.

The gels were transferred into 50 ml centrifugal tubes, stored at 4°C overnight and then weighed. To measure the syneresis at low temperature storing conditions the tubes were stored at 4°C for two weeks. To measure the syneresis at high temperature the tubes were put into a water bath and kept at 80°C for one hour. Finally, the gel was slowly and carefully pressed to separate it from the tube walls and the water exuding was poured off. The samples were weighed again and the loss of water (syneresis) was determined as percentage of the weight of the original sample.

### Texture measurement:

Texture was evaluated by penetration analysis which has been widely used to identify the textural characteristics of gels. A texture analyzer (TA Instruments) with P/0.5 cylinder probes was used for the tests. The sample was made up and poured into standard glass bloom jars (150 ml capacity). After conditioning, the bloom jars were placed centrally under the standard probe and the penetration test commenced. The rupture force, gel brittleness/elasticity can be measured by continue penetration after 4 mm to e.g. 15 mm into the bloom jar. The measurement parameters were as follows:
- Weight calibration
- Height calibration
- Mode: Measure Force in Compression
- Option: Return to Start
- Pre-Test Speed: 0.5 mm/s
- Test Speed: 0.5 mm/s
- Post-Test Speed: 0.5 mm/s
- Distance: 15 mm
- Trigger Type: force - 4g
- Tare Mode: Auto
- Data Acquisition Rate: 200 pps

### Aqueous compositions without oil

**Table 1**

| Ex. # | Cellulose ether | Hydrocolloid | Salt | Additive |
|---|---|---|---|---|
| CE 1-1* | MC (0.8 wt%) | Konjac gum (0.2 wt%) | - | - |
| CE 1-2* | MC (0.8 wt%) | Curdlan (0.2 wt%) | CaCl₂ (0.2 wt%) | - |
| IE 1-3 | MC (0.8 wt%) | Alginate (0.2 wt%) | CaHPO₄ (0.18 wt%) | GDL (0.4 wt%) |
| CE 1-4* | - | Alginate (0.2 wt%) | CaHPO₄ (0.18 wt%) | GDL (0.4 wt%) |
| CE 1-5* | MC (0.9 wt%) | Alginate (0.1 wt%) | CaHPO₄ (0.18 wt%) | GDL (0.4 wt%) |
| IE 1-6 | MC (0.5 wt%) | Alginate (0.5 wt%) | CaHPO₄ (0.18 wt%) | GDL (0.4 wt%) |
| CE 1-7* | MC (1.0 wt%) | - | - | - |
| CE 1-8* | - | Alginate (1.0 wt%) | CaHPO₄ (0.18 wt%) | GDL (0.4 wt%) |
| IE 1-9 | HPMC (0.8 wt%) | Alginate (0.2 wt%) | CaHPO₄ (0.18 wt%) | GDL (0.4 wt%) |
| CE 1-10* | MC (0.5 wt%) | Konjac gum (0.2 wt%) | - | - |
| CE 1-11* | MC (0.5 wt%) | Curdlan (0.2 wt%) | CaCl₂ (0.4 wt%) | - |
| CE 1-12* | MC (0.5 wt%) | Guar gum (0.2 wt%) | - | - |
| CE 1-13* | MC (0.5 wt%) | Agar (0.2 wt%) | - | - |

| | | | | |
|---|---|---|---|---|
| The rest content of each sample is water. * comparative example | | | | |

Samples comprising the above components were prepared as follows:
First, a 3 % by weight solution of MC in water was prepared by weighing MC into a beaker and carefully pouring in distilled water at a temperature of 95°C. The mixture was stirred for 5 min at 1100 rpm, then cooled first in tap water and then in ice water. Afterwards, the solution was stirred for 10 to 15 min at 1100 rpm.

The hydrocolloid solution was prepared by adding hydrocolloid and salt under stirring into water and stirring was continued at 1500 rpm for 2 min at 20°C. The solution was heated to 90°C and stirred at 2000 rpm for 5 min. Then, the solution was cooled in ice water under stirring at 2000 rpm for 10 min. Corresponding amounts of the MC solution and hydrocolloid solution to achieve the concentrations as specified in Table 1 were combined and mixed under stirring at 2000 rpm for 10 min. If alginate was used as hydrocolloid a 20 mmol/l solution of GDL in water was added and stirring was continued at 2000 rpm for 5 min.

### Results:

Samples CE 1-1, CE 1-2, CE1-10, CE-11, CE-12 and CE-13 comprise MC in combination with konjac gum, curdlan, guar gum, or agar respectively, but do not comprise alginate which is an essential component of the polysaccharide hydrocolloid (b) in the edible compositions according to the present invention. Preparing those samples phase separation occurred which indicated the incompatibility between MC and those hydrocolloids. Such incompatibility cannot be solved by adjusting the salt content or blending ratio between MC and konjac gum, curdlan, guar gum, or agar.

On the contrary, interactions seem to occur between MC and alginate (IE 1-3). Surprising synergic effects were observed for IE 1-3. The combined system IE 1-3 gelled at room temperature with proper texture and transparency similar to that of dairy products, especially solid or semi-solid products such as cheese or soft cheese. In the contrast, the individual MC solution CE 1-7 (1 wt% content corresponds to the total amount of MC and hydrocolloid in IE 1-3) is a viscous fluid at room temperature. The individual alginate solution CE 1-8 (1 wt% content corresponds to the total amount of MC and hydrocolloid in IE 1-3) is a gel at room temperature, but the gel is too strong to be applied in dairy products. Although the strength of the alginate gel can be adjusted by reducing corresponding concentration, unacceptable syneresis behavior is another problem for the low content alginate system. Sample CE 1-4 (0.2 wt% alginate gel) excluded about 20% water after 2 week storage at 4°C. The inventive Sample IE 1-3 has outstanding performance to reduce syneresis. The syneresis loss of IE 1-3 is less than 2 % by weight after two weeks storage at 4°C. Even incubated at 80°C for 1 hour, the syneresis is less than 20 % by weight.

Furthermore, the synergistic effects also depends on the specific weight ratio between MC and hydrocolloids. If the ratio of MC and hydrocolloids is above 8:1, such as in CE 1-5 (9:1), the combined system is fluid at room temperature. The texture of IE 1-6 with a ratio of 1:1 is different from that of IE 1-3 and soft-cheese but still acceptable for other dairy food applications. Syneresis performance of IE 1-6 is slightly degraded but still satisfactory.

Sample IE 1-9 comprising HPMC also gelled at room temperature with proper texture and transparency similar to that of dairy products, and has also outstanding performance to reduce syneresis similar to IE 1-3.

**Emulsion systems**

| Ex. # | Cellulose ether (a) | Hydrocolloid (b) | Oil (d) | Water (c) |
|---|---|---|---|---|
| IE 2-1 | MC (0.8 wt%) | Alginate (0.2 wt%) | Peanut oil (20 wt%) | 78.42 wt% |
| IE 2-2 | MC (0.8 wt%) | Alginate (0.2 wt%) Konjac gum(0.2 wt%) | Peanut oil (20 wt%) | 78.22 wt% |
| IE 2-3 | MC (0.8 wt%) | Alginate (0.2 wt%) Curdlan gum (0.2 wt%) | Peanut oil (20 wt%) | 78.22 wt% |

All samples further comprise CaHPO₄ (0.18 wt%) and GDL (0.4 wt%).

The preparation of the emulsions was similar to that of the aqueous solutions of Examples 1. The oil was added together with the MC solution to the system, and then mixed following the above process.

### Description of figures:

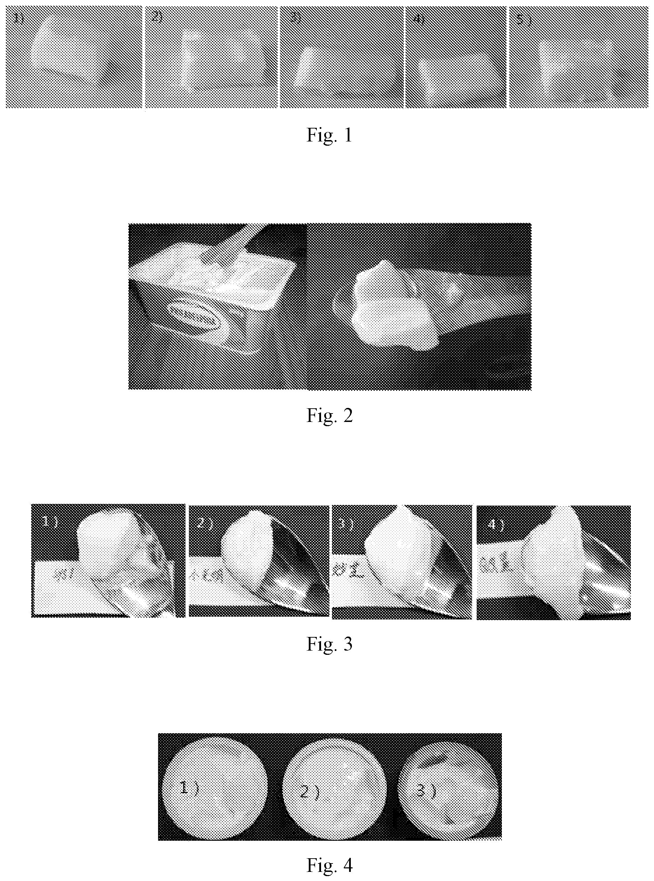

Fig. 1 shows the sample of IE 2-1:
   1) incubated at 5 °C for 2 days.
   2) incubated at 55 °C for 1hour.
   3) incubated at 75 °C for 1hour.
   4) incubated at 85 °C for 1hour.
   5) incubated at 95 °C for 1hour.
Fig. 2: left: commercial soft cheese product (Philadelphia cream cheese from Kraft Food, U.S.A)
   right: sample of IE 2-1 at room temperature
Fig. 3:
   1) sample of IE 2-1
   2) sample of CE 2-4 (Xiaoxiao Guangming)
   3) sample of CE 2-6 (Miaozhi)
   4) sample of CE 2-5 (QQstar)
Fig. 4:
   1) sample of CE 2-5 (QQstar)
   2) sample of mixed IE 2-1/CE 2-5 (1:1)
   3) sample of CE 2-4 (Xiaoxiao Guangming)
Fig. 5:
   1) sample of IE 2-1
   2) sample of CE 2-4 (Xiaoxiao Guangming)
   3) sample of CE 2-6 (Miaozhi)
   4) sample of CE 2-5 (QQstar)

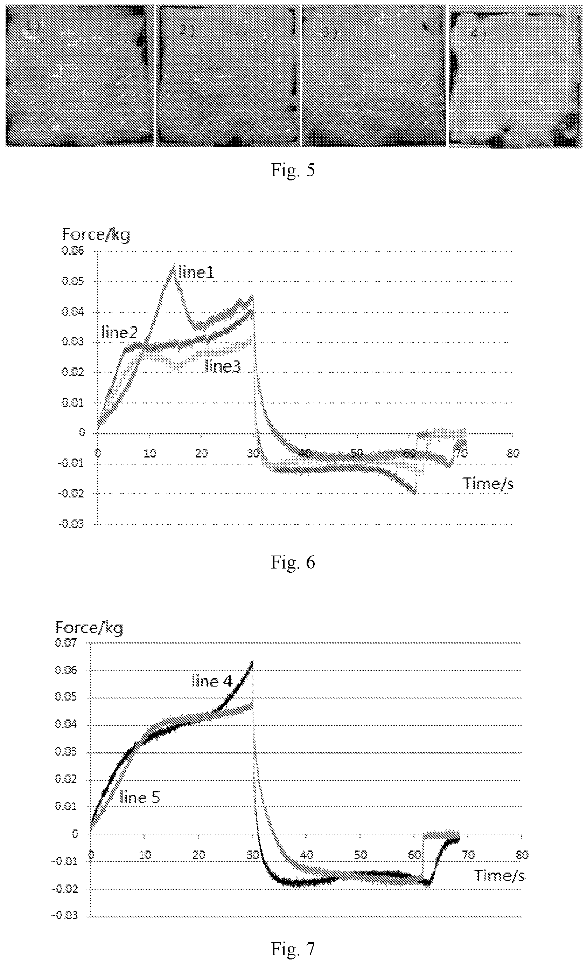

Fig. 6 and 7 show the results of a texture analysis.

### Results:

The samples were stored at 5 °C for 1 day and the appearance of IE 2-1 is shown Fig. 1. It can be observed that the system is a stable gel at from 5 to 95°C. Even at 95°C, the emulsion system is still sliceable and moldable, which is very unique in hydrocolloids systems with such moisture content. The refrigeration test showed that IE-2-1, IE 2-2, and IE 2-3 are also very stable at low temperature. The samples were incubated at - -20°C for 24 hours, then at 25 °C for 18 hours. The appearance of the emulsion system is the same as of the original produced, and no syneresis was observed.

In addition to the outstanding thermal-refrigeration stability, the syneresis of IE 2-1 is also significantly reduced as compared to normal hydrocolloid or MC systems. After incubated 1 hour at different temperature, syneresis results are 0 wt% at 55°C, 4 wt% at 75°C, 7 wt% at 85°C and 19 wt% at 95°C. IE 2-2 and IE 2-3 showed even better performance than IE 2-1, especially at high temperature of 95-100°C. After incubated at 95°C for 1 hour, syneresis can be reduced to 10 % for the IE 2-2 and 4 % for the IE 2-3.

Appearance, texture and mouth feel of IE 2-1, IE 2-2, and IE 3-3 are very similar to that of dairy products such as soft cheese. This is evident form Fig. 2 where pictures of a commercial soft cheese (Philadelphia cream cheese from Kraft) and IE 2-1 are shown.

### Comparison and compatibility with commercial soft cheese

IE 2-1 was further compared with three commercial Chinese soft cheese products:
CE 2-4: Xiaoxiao Guangming, 20 % fat content (Bright Dairy Company, Shanghai, China)
CE 2-5: QQstar, 30 % fat content (Yili Dairy Company, Inner Mongolia, China)
CE 2-6: Miaozhi, 11 % fat content (Yili Dairy Company, Inner Mongolia, China)

### Appearance:

The appearance of the IE 2-1 and all three commercial products is very similar as shown in Fig. 3.

### Texture:

The textures of all samples are very similar as shown in Fig. 6 (line 1 represents IE 2-1, line 2 represents CE 2-4, and line 3 represents CE 2-5). The difference is that IE 2-1 shows a rapture strength peak due to the gel property. This peak indicates the point at that gel ruptured by pressure of the probe. It is an indication of the gel behavior of the inventive system. Considering IE 2-1 is just a gel system without any dairy ingredients inside, such rapture strength peak will be mediated by adding further dairy ingredients. The comparison demonstrated that the present system is very potential to simulate the texture of dairy products, especially that of soft cheese.

### Compatibility:

The inventive sample IE 2-1 shows excellent compatibility when mixing with the commercial products without negative influences. As shown in Fig. 4, a mixed sample comprising CE 2-5 and IE 2-1 at the weight ratio of 1:1 (marked as No.2) is compared with two samples CE 2-5 (marked as No. 1) and CE 2-4 (marked as No. 3). There is no sigmificant difference between pure CE 2-5 and mixed CE 2-5/IE 2-1. The mixed CE 2-5/IE 2-1 formulation is even slightly smoother than pure CE 2-5. The appearance will not change even after one week storage.

As shown in Fig. 7, the mixed CE 2-5/IE 2-1 was compared with another commercial soft cheese sample CE 2-6 (line 4 represents mixed CE 2-5/IE 2-1 sample, line 5 represents CE 2-6 sample). The texture profile shows that the texture of the mixed CE 2-5/IE 2-1 sample is more similar to that of soft cheese CE 2-6 than the pure IE 2-1. It can be concluded that adding a dairy component will refine the texture of the inventive emulsion system.

### Spreadability:

The spreading property of the samples was also tested. Same amounts (4 g) of IE 2-1 and commercial soft cheeses CE 2-4, CE 2-5 and CE 2-6 were spread on a polyester substrate (5 cm x 5 cm). The substrate has a very smooth surface. Spreading results demonstrated that IE 2-1 has similar spreading behavior as the commercial products.

## Claims

1. An edible composition comprising:
(a) a cellulose ether selected from
(a1) methylcellulose,
(a2) hydroxypropyl methylcellulose,
and mixtures thereof;
(b) a polysaccharide hydrocolloid selected from
(b1) alginic acid, alginates and mixtures thereof, and
mixtures of (b1) with (b2) a non-ionic and non-acidic polysaccharide hydrocolloid different from cellulose ethers,
(c) water in an amount of 20 to 99% by weight based on the total weight of the composition , and
(d) optionally a sugar in an amount of up to 10% by weight based on the total weight of the composition
wherein the total amount of cellulose ether (a) and polysaccharide hydrocolloid (b) ranges from 0.01 to 9 % by weight, based on the total weight of the composition, and the weight ratio of cellulose ether (a) to polysaccharide hydrocolloid (b) is within the range of from 1:8 to 8:1.

2. The edible composition of claim 1 further comprising
(e) from 1 to 40 % by weight of triglyceride oil.

3. The edible composition of claims 1 or 2 further comprising
(f) from 0.01 to 10 % by weight of a salt.

4. The edible composition of claim 3 wherein the salt comprises a multivalent cation, preferably a divalent cation, such as Ca²⁺, Mg²⁺ and/or Zn²⁺, in combination with a food safe anion such as phosphate, hydrogen phosphate and/or chloride.

5. The edible composition of claim 4 wherein the salt is selected from calcium phosphate, calcium hydrogen phosphate, and mixtures thereof.

6. The edible composition of claim 5 further comprising glucono delta-lactone (GDL).

7. The edible composition of any of claims 1 to 6 wherein the non-ionic and non=acidic polysaccharides hydrocolloid (b2) is selected from curdlan, guar gum, fenugreek gum, locust bean gum, konjac gum, agarose and mixtures thereof.

8. The edible composition of any of claims 1 to 7 wherein the cellulose ether (a) is methylcellulose.

9. The edible composition of any of claims 1 to 8 wherein the weight ratio of cellulose ether (a) to polysaccharide hydrocolloid (b) is within the range of from 1:2 to 6:1, preferably from 1:1 to 5:1 , and more preferably from 2:1 to 4:1.

10. The edible composition of any of claims 1 to 9 comprising
(a) cellulose ether and
(b) polysaccharide hydrocolloid
in a total amount of (a) + (b) of 0.01 to 9 % by weight,
(c) 41 to 98.98 % by weight of water,
(d) 1 to 40 % by weight of triglyceride oil, and
(e) 0.01 to 10 % by weight of the salt,
all percentages being based on the total weight of the composition.

11. The edible composition of any of claims 1 to 10 further comprising
(f) from 0.01 to 10 % by weight of a sugar.

12. An edible product comprising 0.05 to 99.99 % by weight of the edible composition according to any of claims 1 to 11.

13. The edible product of claim 12 comprising:
(i) 0.5 to 99.5 % by weight a base food component, and
(ii) 0.5 to 99.5 % by weight of the edible composition according to any of claims 1 to 11.

14. The edible product of claim 13 wherein the base food component (i) is dairy-based, preferably soft cheese or cream cheese.

15. Use of the edible composition according to any of claims 1 to 11 to at least partially substitute fat in an edible product, preferably a dairy product.

## Patentansprüche

1. Essbare Zusammensetzung enthaltend:
(a) einen Celluloseether, ausgewählt aus
(a1) Methylcellulose,
(a2) Hydroxypropylmethylcellulose
und Mischungen davon,
(b) ein Polysaccaridhydrocolloid, ausgewählt aus
(b1) Alginsäure, Alginaten und Mischungen davon und Mischungen von (b1) mit (b2) einem nichtionischen und nichtsauren Polysaccharidhydrokolloid, das sich von Celluloseethern unterscheidet,
(c) Wasser in einer Menge von 20 bis 99 Gew.-%, bezogen auf das Gesamtgewicht der Zusammensetzung, und
(d) optional Zucker in einer Menge von bis zu 10 Gew.-%, bezogen auf das Gesamtgewicht der Zusammensetzung,
wobei die Gesamtmenge von Celluloseether (a) und Polysaccaridhydrokolloid (b) im Bereich von 0,01 bis 9 Gew.-%, bezogen auf das Gesamtgewicht der Zusammensetzung, liegt und das Gewichtsverhältnis von Celluloseether (a) zu Polysaccharidhydrokolloid (b) im Bereicht 1:8 bis 8:1 liegt.

2. Essbare Zusammensetzung nach Anspruch 1, die zusätzlich
(e) 1 bis 40 Gew.-% eines Triglyceridöls enthält.

3. Essbare Zusammensetzung nach Anspruch 1 oder 2, die zusätzlich
(f) 0,01 bis 10 Gew.-% eines Salzes enthält.

4. Essbare Zusammensetzung nach Anspruch 3, wobei das Salz ein mehrwertiges Kation, vorzugsweise ein zweiwertiges Kation, wie zum Beispiel Ca²⁺, Mg²⁺ und/oder Zn²⁺, in Kombination mit einem für Lebensmittel sicherem Anion, wie zum Beispiel Phosphat, Hydrogenphosphat und/oder Chlorid, enthält.

5. Essbare Zusammensetzung nach Anspruch 4, wobei das Salz ausgewählt ist aus Calciumphosphat, Calciumhydrogenphosphat und Mischungen davon.

6. Essbare Zusammensetzung nach Anspruch 5, die weiterhin Glucono-δ-lacton (GDL) enthält.

7. Essbare Zusammensetzung nach einem der Ansprüche 1 bis 6, wobei das nichtionische und nichtsaure Polysaccharidhydrocolloid (b2) ausgewählt ist aus Curdlan, Guargummi, Bockshornkleegummi, Johannisbrotkernmehl, Konjakgummi, Agarose und Mischungen davon.

8. Essbare Zusammensetzung nach einem der Ansprüche 1 bis 7, wobei der Celluloseether (a) Methylcelllulose ist.

9. Essbase Zusammensetzung nach einem der Ansprüche 1 bis 8, wobei das Gewichtsverhältnis von Celluloseether (a) zu Polysaccaridhydrokolloid (b) im Bereich von 1:2 bis 6:1, vorzugsweise von 1:1 bis 5:1 und besonders bevorzugt von 2:1 bis 4:1 liegt.

10. Essbare Zusammensetzung nach einem der Ansprüche 1 bis 9, enthaltend:
(a) Celluloseether und
(b) Polysaccharidhydrokolloid
in einer Gesamtmenge von (a) + (b) von 0,01 bis 9 Gew.-%,
(c) 41 bis 98,98 Gew.-% Wasser,
(d) 1 bis 40 Gew.-% Triglyceridöl und
(e) 0,01 bis 10 Gew.-% Salz,
wobei alle Prozentangaben sich auf das Gesamtgewicht der Zusammensetzung beziehen.

11. Essbare Zusammensetzung nach einem der Ansprüche 1 bis 10, die weiterhin
(f) 0,01 bis 10 Gew.-% Zucker enthält.

12. Essbares Produkt, enthaltend 0,05 bis 99,99 Gew.-% der essbaren Zusammensetzung gemäß einem der Ansprüche 1 bis 11.

13. Essbares Produkt nach Anspruch 12, enthaltend:
(i) 0,5 bis 99,5 Gew.-% einer Basislebensmittelkomponente und
(ii) 0,5 bis 99,5 Gew.-% der essbaren Zusammensetzung gemäß einem der Ansprüche 1 bis 11.

14. Essbares Produkt nach Anspruch 13, wobei die Basislebensmittelkomponente (i) ein Milchprodukt, bevorzugt Weichkäse oder Doppelrahmkäse, ist.

15. Verwendung der essbaren Zusammensetzung nach einem der Ansprüche 1 bis 11, um wenigstens teilweise Fett in einem essbaren, bevorzugt einem Milchprodukt, zu ersetzen.

## Revendications

1. Une composition comestible comprenant :
(a) un éther de cellulose sélectionné parmi
(a1) la méthylcellulose,
(a2) l'hydroxypropyl méthylcellulose,
et des mélanges de ceux-ci ;
(b) un hydrocolloïde de polysaccharide sélectionné parmi
(b1) l'acide alginique, les alginates et des mélanges de ceux-ci, et des mélanges de (b1) avec (b2) un hydrocolloïde de polysaccharide non-ionique et non-acide différent des éthers de cellulose,
(c) de l'eau en une quantité allant de 20 à 99 % en poids rapporté au poids total de la composition, et
(d) éventuellement un sucre en une quantité allant jusqu'à 10 % en poids rapporté au poids total de la composition
dans laquelle la quantité totale d'éther de cellulose (a) et d'hydrocolloïde de polysaccharide (b) se trouve dans la gamme allant de 0,01 à 9 % en poids, rapporté au poids total de la composition, et le rapport en poids de l'éther de cellulose (a) à l'hydrocolloïde de polysaccharide (b) est compris dans la gamme allant de 1/8 à 8/1.

2. La composition comestible de la revendication 1 comprenant en sus
(e) de 1 à 40 % en poids d'huile de triglycéride.

3. La composition comestible des revendications 1 ou 2 comprenant en sus
(f) de 0,01 à 10 % en poids d'un sel.

4. La composition comestible de la revendication 3 dans laquelle le sel comprend un cation multivalent, de préférence un cation divalent, tel que Ca²⁺, Mg²⁺ et/ou Zn²⁺, en combinaison avec un anion qui convient pour des aliments tel que le phosphate, le phosphate d'hydrogène et/ou le chlorure.

5. La composition comestible de la revendication 4 dans laquelle le sel est sélectionné parmi le phosphate de calcium, le phosphate d'hydrogène de calcium, et des mélanges de ceux-ci.

6. La composition comestible de la revendication 5 comprenant en sus de la deltagluconolactone (DGL).

7. La composition comestible de n'importe lesquelles des revendications 1 à 6 dans laquelle l'hydrocolloïde de polysaccharide non-ionique et non-acide (b2) est sélectionné parmi le curdlane, la gomme de guar, la gomme de fenugrec, la gomme de caroube, la gomme de konjac, l'agarose et des mélanges de ceux-ci.

8. La composition comestible de n'importe lesquelles des revendications 1 à 7 dans laquelle l'éther de cellulose (a) est de la méthylcellulose.

9. La composition comestible de n'importe lesquelles des revendications 1 à 8 dans laquelle le rapport en poids de l'éther de cellulose (a) à l'hydrocolloïde de polysaccharide (b) est compris dans la gamme allant de 1/2 à 6/1, de préférence de 1/1 à 5/1, et de préférence encore de 2/1 à 4/1.

10. La composition comestible de n'importe lesquelles des revendications 1 à 9 comprenant
(a) de l'éther de cellulose et
(b) de l'hydrocolloïde de polysaccharide
en une quantité totale de (a) + (b) allant de 0,01 à 9 % en poids,
(c) de 41 à 98,98 % en poids d'eau,
(d) de 1 à 40 % en poids d'huile de triglycéride, et
(e) de 0,01 à 10 % en poids du sel,
tous les pourcentages étant rapportés au poids total de la composition.

11. La composition comestible de n'importe lesquelles des revendications 1 à 10 comprenant en sus
(f) de 0,01 à 10 % en poids d'un sucre.

12. Un produit comestible comprenant de 0,05 à 99,99 % en poids de la composition comestible selon n'importe lesquelles des revendications 1 à 11.

13. Le produit comestible de la revendication 12 comprenant :
(i) de 0,5 à 99,5 % en poids d'un constituant alimentaire de base, et
(ii) de 0,5 à 99,5 % en poids de la composition comestible selon n'importe lesquelles des revendications 1 à 11.

14. Le produit comestible de la revendication 13 dans lequel le constituant alimentaire de base (i) est à base de lait, de préférence un fromage à pâte molle ou un fromage frais.

15. Utilisation de la composition comestible selon n'importe lesquelles des revendications 1 à 11 pour remplacer au moins en partie la matière grasse dans un produit comestible, de préférence un produit laitier.
